# EUROPEAN PATENT APPLICATION

(11) **EP 1 850 284 A1**
(43) Date of publication of application: **31.10.2007**
(21) Application number: 06008715.2
(22) Date of filing: 27.04.2006
(51) Int. Cl.: G06Q 30/00

(54) **A computer system for automatically matching the requirements from a customer with the capabilites of a supplier**

(71) Applicant: Unigate Technologies ApS, 8520 Lystrup (DK)
(72) Inventor: Kristensen, Jess, 8543 Hornslet (DK)
(74) Representative: Medenwaldt, Robin

(57) **Abstract**

A computer system for automatically matching the requirements from a customer with the capabilities of a supplier of a complex product built up of modules. The system comprises a digital database with specifications for modules and comprises a classification scheme with a number of supply classes. Each supply class is associated with a range of complexity factors and ahs a class capacity factor expressing the supply capacity of the specific classes relative to the total supply capacity of the supplier. The system is configured to
- determine a complexity factor dependent on the complexity of the product,
- determine the specific supply class associated with the complexity factor,
- determine a needed supply capacity for supplying the product,
- compare whether the needed supply capacity is less than or equal to the capacity factor of the specific class and only to accept an order for supply of a product, if this is the case.

## Description

### FIELD OF THE INVENTION

The present invention relates to a computer system for automatically matching the requirements from a customer with the capabilities of a supplier of a complex product built up of modules.

### BACKGROUND OF THE INVENTION

When a representative of a supplier for a complex product, such as a conveyor for an airport, estimates the costs for the product, a number of factors are taken into account. One of the key factors is the size and complexity of the final product, but a number of other factors may influence the final costs, such as the time for delivery and necessary public approvals. Thus, once the demand of the customer has been identified, an offer from the producer is worked out at the company and submitted to the customer for acceptance or further modification. Typically, the representative, when visiting a potential customer, is not able to tell the potential customer an approximate price or even the time schedule for the product during the first meetings, because the production time is dependent on the complexity, and the price is dependent on both the complexity and the required delivery time by the customer. A short delivery time may require that large parts of the production capacity are working entirely on a single product, which may be counteracting rationalised use of the production capacity.

Once the representative of the supplier together with the customer has worked out the necessary components of the complex product, typically another division in the company is working out the costs. In certain cases, the costs and production time may be reduced substantially, if certain components are substituted by others with only a slight modification of the product as experienced by the customer However, this kind of optimisation may require a large number of iterations of the offer from the supplier and the specifications from the customer, which in turn requires time and effort from both sides. As a result, the customer may pay much more than necessary for the product, because the customer is not aware of the fact that a slight modification of the product may save a large part of the costs. In turn, the supplier is not aware of the fact that a slight modification for saving costs may still satisfy the needs of the customer and may be used to optimise the entire production.

It is therefore desirable to find means that would ease the process for dimensioning complex products at an earlier stage taking into account the requirements of the customer but also decisive factors, such as production capacity, for the supplier.

### DESCRIPTION / SUMMARY OF THE INVENTION

It is therefore the object of the invention to provide a system to facilitate the design of complex products in relation to the needs of the customer and the capabilities of the supplier. Especially, it is the purpose of the invention to provide a system that can be used by the representative during the first meetings with the customer in order to work out the iterations on-site in order to find the solution that, on the one hand, satisfies the customer and, on the other hand, takes into account the supplier's capabilities, such that also the supplier may optimise the earnings.

This object is achieved by a computer system according to the invention for automatically matching the requirements from a customer, for example delivery of a certain product at a given time for a given price, with the capabilities of a supplier of a complex product built up of modules, for example production and assembly capacities and production costs. The system comprises a digital database containing specifications for the modules making up the product. The database also contains a classification scheme with a number of supply classes, for example a first class for standard products, a second class for more complex products and a third class for products requiring special development. Each supply class is associated with a range of complexity factors, for example a factor of between 1 and 1.2 for standard products, a factor of between 1-2 and 1.5 for more complex products, and a factor of higher than 1.5 for products requiring special development. Each supply class is associated with a class capacity factor expressing the supply capacity of the specific classes relative to the total supply capacity of the supplier. For example the capacity factor of products or modules in the first class with standard products may be 50%, which is relatively high in order for the supplier to earn a certain basic amount for standard products. The capacity factors of the second and third class may be 25% each in order to be able to deliver more difficult products on demand, even though the earnings may be lower due to the additional man power that is necessary or the more difficult production system required.

The system according to the invention comprises a computer that is configured to automatically determine a complexity factor, for example 1.3, dependent on the complexity of the product. For example, the computer may calculate a complexity factor dependent on the modules making up the product and in dependence of the work necessary for the assembly of the modules. Furthermore, the system is configured to determine the specific supply class associated with the complexity factor, for example the second class to which the complexity factor 1.3 belongs. As a further step, a needed supplier capacity is determined for supplying the product, for example 20% for the second class, and it is determined whether the needed supplier capacity, for example the 20%, is less than or equal to the capacity factor, for example 25%, of the specific class and only to accept an order for supply of a product, if this is the case.

The system according to the invention is an automated computer system for a representative of the supplier company, where the system is used to calculate, whether a product requested by a customer fits into the parameter set by the company. For example, if the product requested by the customer does not fit to the parameters, the representative may not be able to sell the product. Primarily, the system is implemented in a portable computer in order for the representative to be able to construct a solution in dependence of the requirements of the customer at the customer's site, though the implementation in a portable computer is not strictly necessary for the invention. For example, the representative may carry a portable computer with a wireless connection to a remote database.

A number of computers may be carried by different representatives, where all computers are connected through a wireless digital data network to a common remote database that is dynamically updated at all times such that the representatives have access to the correct, updated data available. Alternatively, the representatives do not need to carry a computer with them but have access to the computer of the system and the database through the internet. Thus, any computer connected to the Internet or other similar data network may be used to get access to the computer of the system and the database. Access may be given by an Internet portal with a corresponding user interface such that product configuration and calculation can be performed through this Internet portal. Likewise, the customer may use the Internet portal to find a suitable product configuration. As a further embodiment, the program for calculation and the database or part of the database may be stored on a storage medium, for example a CD rom, for product configuration on a computer that is selected by the user.

In a further embodiment, the class capacity factor is time dependent and variable in dependence of the requested delivery time. For example, the capacity factor of 25% of the second class may be increased if the delivery time is long, because the supplier may schedule the supply of other products accordingly and get more capacity in this class by rearranging deliveries to other customers.

The capacity factors may express the entire production capacity of a supplier. In this case, the original 50% overall capacity of the first class may be reduced to 20%, because other products require the remaining 30% of the first class already. In this case, it is necessary that the capacity factors dynamically are updated in dependence of the actual supply capacity of the supplier. Such an update may be performed in each representative's portable computer through a wireless connection or the update may be performed in a common accessible remote database.

Also, it may be possible that the capacity of the first class is increased to 60% in total in case that there are no products in the second or third class in production. Thus, by dynamically updating the classes, different representatives may work out offers for the customers without the risk that the sum of the offers requires more production capacities than entirely available.

In a practical embodiment, the complexity factor is a sum of weighted partial complexity factors. For example, the complexity factor K for a product may be expressed as a weighted sum K= α₁K₁+α₂K₂+ ...+αₙKₙ, where αₙ is the weighting factor and Kₙ is the partial complexity factor. Such a partial complexity factor may be associated with production complexity, production time, complexity of the assembly of the product, time for assembly of the product, with necessary approvals in connection with the supply of the product.

In addition, the weight factors may be dependent on the acceptable delivery time or the acceptable costs or both. For example, if it is important that the delivery time is short, it is more difficult to deliver the product as other orders have to be delayed, which increases the weighted complexity factor. However, if the customer is willing to pay an additional price, this may reduce another weighted complexity factor, such that the total complexity factor ends in the acceptable range. On the other hand, if a long delivery time is acceptable by the customer, the weighting factor of the related complexity factor may be low, because this gives the supplier the chance to place the order in a convenient location in the production line.

In a further embodiment, the system is configured to fragmentise the product into a number of modules. For each module, a module complexity factor and the associated supply class is determined. The needed module supplier capacity for each module is found to find whether all of the needed module supplier capacities fit into the class capacity factors. If the module supply capacities when grouped are less the maximum capacities, the product order may be accepted.

In an even further embodiment, the system is configured to determine a delivery time for each module in dependence of a time dependent supply capacity in the respective class associated for each module and configured to calculate in dependence of the delivery time for each module a sequence of module assembly actions and check whether the complete sequence of actions fit into a final deadline for the entire assembly of the product. If the assembly time is long, the production may be stretched for delivery of modules only at the time, where the module is needed for assembly. This reduces storage time for the modules at the producer's or customer's site and leaves more freedom for the supplier to optimise the production lines to satisfy as many customers as possible.

For optimisation of such a process, a sequence may be calculated for production of the modules and in dependence thereof an assembly sequence may be calculated. Then, the assembly sequence may be checked whether it matches a desired deadline for the entire assembly of the product. If a match is not achieved, the production and assembly sequence may be changed iteratively until a match is found or until the time for entire assembly is the earliest possible. This earliest possible time may be used as a proposal to the customer for earliest possible delivery of the product.

In a more advanced embodiment, the computer system is configured to receive tolerance ranges for specifications of the product and automatically determine a complex product having product specification within the tolerance ranges together with its complexity factor. This complexity factor may be compared with a predetermined threshold complexity factor, whether the product is acceptable. If the complexity factor is higher than the threshold, the products may be fragmentised into a number of modules with corresponding module complexity factors. In order to reduce the overall complexity factor, an iterative process may be used, where modules with a high complexity factors are substituted with modules having lower complexity factors until the complexity factor is reduced. In this case, it is at all times assured that the product specifications are still within the tolerance ranges. The iterative substitution may continue until the complexity factor is equal to or below the threshold complexity factor, or until the complexity factor is minimised, In the latter case, the complexity factor may be further reduced by prolonging the delivery time or by increasing the price, or the order may be accepted only after special agreement between the representative of the supplier and a higher instance of the supplier, for example the director of the supplier company.

When a representative of the supplier is located at the customer's site, the actual class capacities reflecting the actual supply capacity of the supplier in the different classes may be submitted to the portable computer of the representative as digital data from a central server. This way, the computer of the representative is always updated, for example through a wireless digital data network, such as a GPRS network, which is necessary, especially, if there are a number of representatives actively selling products at effectively the same time. As soon as a product sale is agreed on, the server calculates new class capacities, and optionally new weighting factors, and updates all the computers of the representatives with the new data in order to optimise production and sale.

The above examples are for illustration only and do not limit the invention in any way.

### SHORT DESCRIPTION OF THE DRAWINGS

The invention will be explained in more detail with reference to the drawing, where
- FIG. 1: a and b illustrate the invention schematically,
- FIG. 2: illustrates the database,
- FIG. 3: illustrates the software procedure of the computer system by a flow diagram,
- FIG. 4: is a flow diagram for the first iterative optimisation procedure,
- FIG. 5: is a flow diagram for the second iterative optimisation procedure.

### DETAILED DESCRIPTION / PREFERRED EMBODIMENT

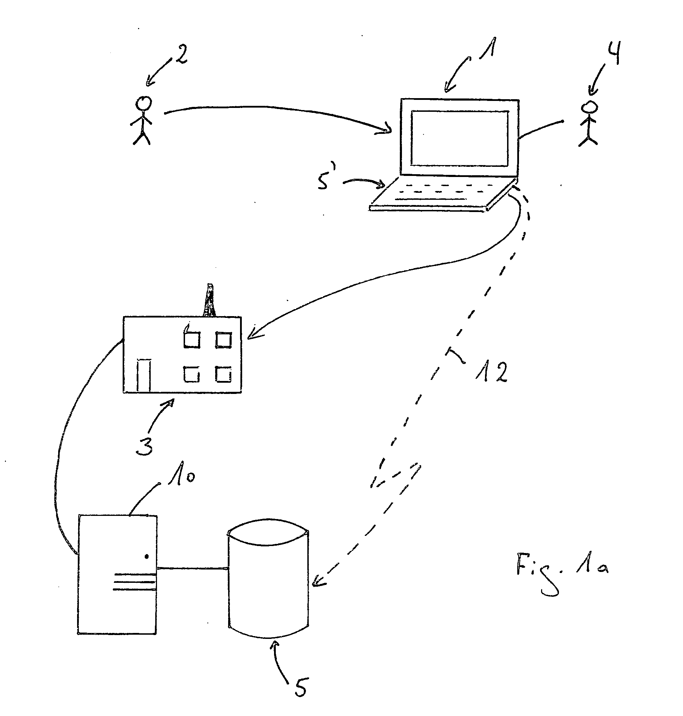

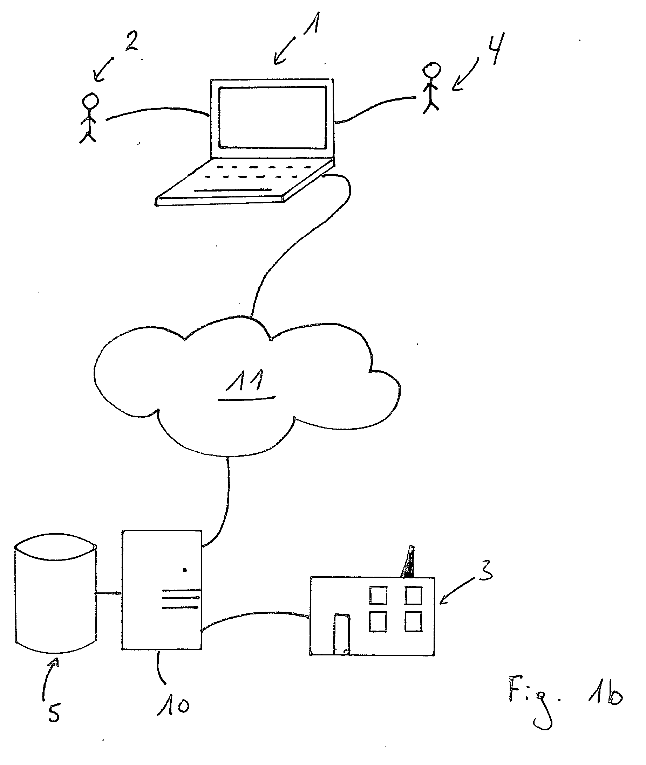

FIG. 1a illustrates the invention schematically in a first embodiment. A computer system, preferably comprising a portable computer 1 as indicated, is used by a representative 4 of the supplier 3 for matching the requirements from a customer 2 with the capabilities of a supplier 3. The computer system comprises a digital database 5 containing specifications for the modules making up the product. The digital database 5 may be accessible through a server system 10 associated with the supplier 3. Alternatively; the database 5 may be accessible through the server system 10 or directly by a wireless link 12. The computer 1 may have a database 5' that comprises some or all of the data from the remote database 5 and which is updated regularly with data from the remote database 5. If an order has been accepted by one specific representative, the remote database 5 is updated with this information by receiving data from the computer of the specific representative. Afterwards, the databases 5' in the computers carried by the other representatives are updated by receiving data from the remote database 5.

An alternative embodiment is illustrated in FIG. 1b, where the customer 2 and/or the representative 4 have access to a computer I that is functionally connected to the Internet 11, such that calculations can be performed on a computer/server 1.0 with access to the database 5.

The product may be a conveyor as it is used in airports- Such conveyors are made up of a plurality of modules that are assembled after delivery. A conveyor system is a complex product that takes substantial time to produce and deliver. Some of the modules are standard products while others have special requirements and have to be constructed especially in accordance with the requirements of the customer.

The supplier 3 may allocate different production capacities on their production lines for different modules. For example, a first production capacity may be used for standard products, whereas other production capacities are used for special constructions. Often, suppliers allocate a certain part of the production capacities for special constructions, for example 25% of the total production capacity. Often, the highest turnover and earning are achieved with those products that are standard for the supplier. However, special modules may be necessary to deliver in order to satisfy a broad group of customers and, in addition, it may imply increase in the know-how of the supplier, which is beneficial in the long run. Thus, typically the supplier allocates production capacities to certain categories of products with the aim that there are products in all categories most of the time in order to use the production capacities most efficiently.

Difficulties arise, if different representatives of the supplier sell a high number of special products at the same time. Once, the allocated production capacities for special products are filled up with orders, all representatives have to be contacted in order to submit information about the remaining capacities to them. However, between the signing of an order and the allocation of production capacities, substantial time may pass, and orders may have been taken in which cannot be delivered within the time schedule for the order, because the intake of orders and the capacities of the production are not matched in real time.

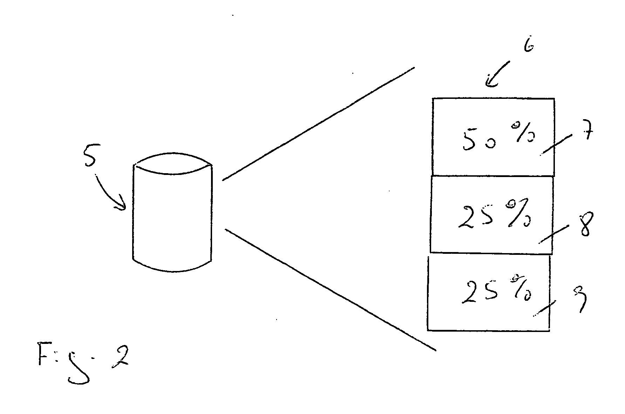

The invention has the aim to improve this situation. The computer system comprises a digital database 5 as illustrated in FIG. 2 containing specifications for the modules making up the product. The database 5 also contains a classification scheme 6 with a number of supply classes, for example a first class 7 for standard products, a second class 8 for more complex products and a third class 9 for products requiring special development. The database may contain more classes than the three classes 7, 8, 9 shown.

Each supply class 7, 8, 9 is associated with a range of complexity factors, for example a factor of between 1 and 1.2 for standard products, a factor of between 1.2 and 1.5 for more complex products, and a factor of higher than 1.5 for products requiring special development.

Each supply class is associated with a class capacity factor expressing the supply capacity of the specific classes relative to the total supply capacity of the supplier. For example the capacity factor of products or modules in the first class 7 with standard products may be 50%, and the capacity factors of the second 8 and third class 9 may be 25% each in order to be able to deliver more difficult products on demand.

In a specific embodiment, a first class may be related to those products that are standard products which pass the production facilities rather fast. Such products are typically termed Fast Runners. A second class may be related to those product that require more time for production and a third class may be related to products that require a relative long time to produce. These two types of products are typically termed Medium runners and Slow Runners, respectively. All of these may be standard products but require different production time and effort such that a Slow Runner is more expensive to produce than a Fast Runner product. If the production capacity of the class with fast runners is reached, there may be allocated more capacity for Fast Runners in one of the other classes. This means in practice that the sizes of the classes are dynamically adjusted in correspondence with the capacity needs of the supplier in order to fulfil the orders of the customer.

Alternatively, the sizes of the classes may be kept constant, but a Fast Runner - if no available capacity in the first class - may get assigned a different K value in order to fit into one of the other classes, for example the Slow Runner. This means in practice that a client can get a Fast Runner produced despite the fact that there for the time being is no capacity for it. In such cases, there may be charged an additional rush fee which counterbalances the additional income for the supplier which would have been achieved when having taken a Slow Runner into the production instead of a Fast Runner.

Often, Fast Runners are those products that give a high income but do not contribute to a special customer satisfaction, because the product is a standard product. On the other hand, Slow Runners do not give a high income for the supplier but add to the customer satisfaction, because the customer experiences specialised custom made product solutions satisfying the needs of the specific customer. Thus, the actually used Slow Runner capacity may reflect the supplier's effort to increase the customer satisfaction. In case that the size of the classes are dynamically adjusted such that the Slow Runner class sometimes is large and sometimes is small, this class is difficult to relate to an overall effort of the supplier to increase the customer satisfaction. This argument favours constant class sizes. On the other hand, if the Slow Runner class is not filled up, this capacity should be used on Medium Runners or Fast Runners. A solution to this dilemma is the above mentioned change of the K value such that a Fast Runner product may regarded as a Slow Runner. The product, though in fact being a Fast Runner, adds nevertheless to the customer satisfaction, because the customer gets a specific product delivered faster than would be possible, if it stayed in the Fast Runner class and had to wait substantial time in order to be produced. Therefore, the K factor may be chosen such that it is dependent on the delivery time. If the delivery time is desired by the customer to be short, the K factor may be larger than for the same product having a large delivery time.

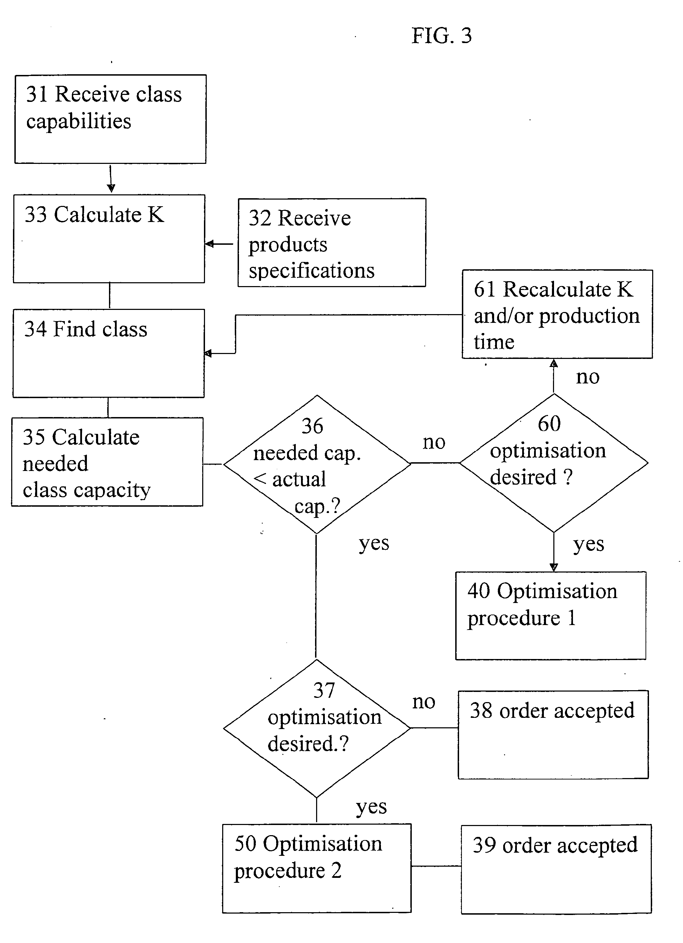

In FIG. 3, a flow diagram is shown illustrating an embodiment for the functioning of the programmed computer. The computer receives 31 figures for the class capacities. The received class capacities may be stored on the computer stationary, or preferably are updated dynamically in accordance with the actual capacities in dependence of other products in the production facilities. For example, if a number of products with low complexity are produced the production line, the class capacity for low complexity products may be set low and the class capacity for high complexity products set high. A dynamic updating of the class capacities may be performed each time, a contract for an order has been signed such that the delivery capacities are optimised and the supplier facilities exploited in an optimum way.

With reference to FIG. 3, once the representative has received the product specifications, these are entered 32 into the computer system through a suitable user interface of the computer system. The system calculates 33 the complexity factor K of the product and finds 34 the corresponding class together with the required estimated capacity 35. If the needed capacity is less than the available capacity 36, the order may be accepted 38. However, if desired 37, it is possible to perform another optimisation 50, for example in order to reduce the necessary costs for the client or for proposing a different delivery time before the order is accepted 39. If the needed capacity is higher than the actual capacity, which may indicate that the production capacity is not sufficient, another optimisation procedure 40 may be used, if desired. If no optimisation procedure is required, the production time may be changed 61 such that production capacity is available at a later stage. Alternatively, the K factor may be changed 61 in order to allocate space in a different class. In this connection, it may be noticed that in a more advanced embodiment, the production time may be part of the K factor.

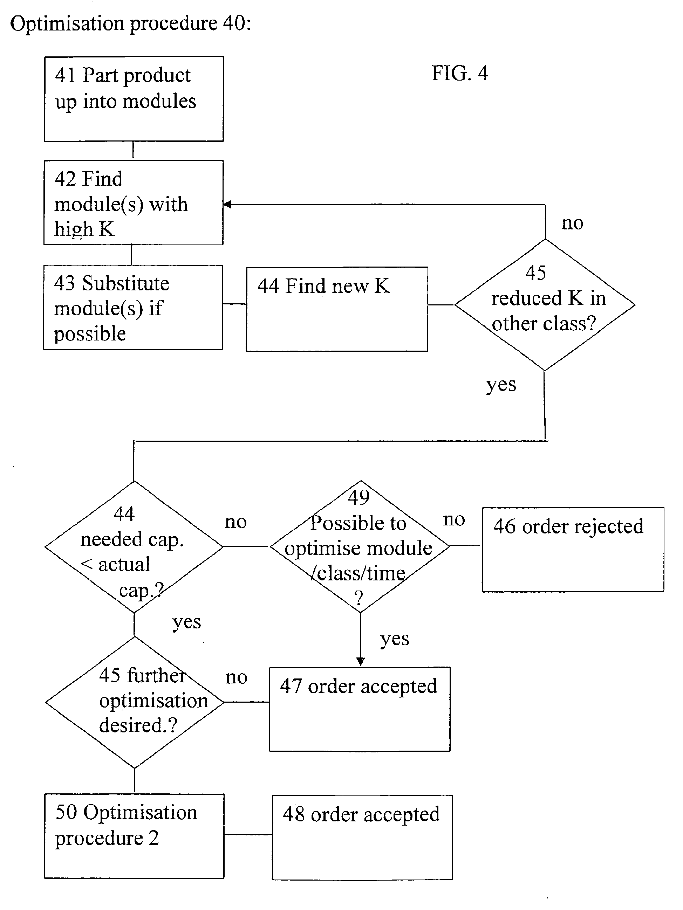

The optimisation procedure 40 is illustrated in FIG. 4. As the needed class capacity was higher than the available class capacity, a change of the capacities allocated for the different K factors may be achieved by investigation as to whether the K factor can be reduced in order for the product to fit into a different class. For this reason, the product is parted into modules 41 and complexity factors (K factor) for the modules are investigated 42. For example, it may be investigated, whether the high K factor is due to a few highly complicated modules, or whether the high K factor is reflected by each of the modules. In the former case, a substitution 43 of a few modules into less complex modules may change 44 the overall K-factor such that the product fits 45 into another class for which the capacity 46 is acceptable and the order can be accepted 47.

If it is not possible to fit the product into a class with sufficient capacity, the order may be rejected 46. Before the order is rejected, it may be investigated 49, whether the modules may be distributed into the different classes such that the entire product belongs to several classes. This may imply that the delivery time only may be accepted for some of the modules with a later delivery and assembly of other modules.

If desired 45, it is possible to perform another optimisation 50, for example in order to reduce the necessary costs for the client or for proposing a different delivery time before the order is accepted 48.

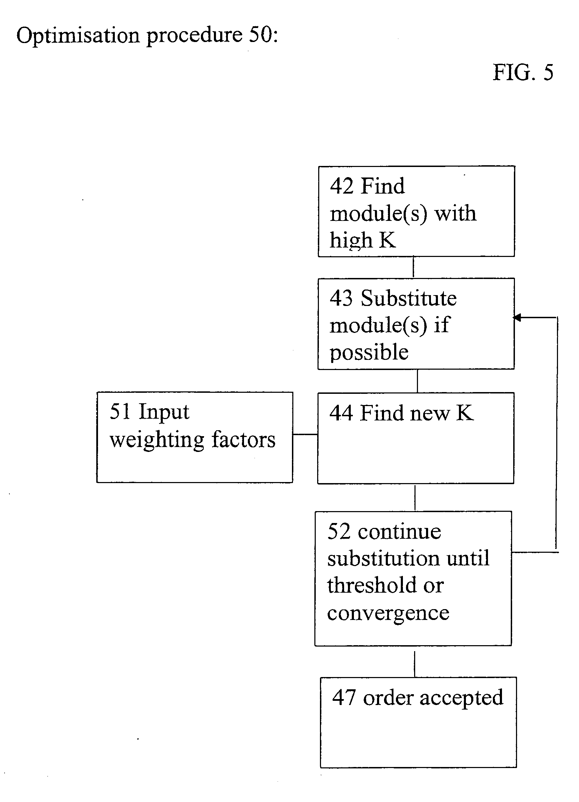

The optimisation procedure 50 is illustrated in more detail in FIG. 5. Even though an order may be ready for acceptance, still a certain optimisation may be achieved. For instance, it may be that the product or some of the modules can be produced and assembled at lower cost, if the customer accepts a longer delivery time. Or, the delivery time can be shortened, if the price is raised. For this, the K factor is iterated 43, 44, 45 by substitution 43 of certain module with other modules. In addition, the weighting factors for the partial factors for K may be changed 51. For example, one of the partial complexity factors may relate to delivery time. If the delivery time is not so essential, the weighting factor for this corresponding complexity factor may be low and may even be changed during the iteration in order to find a match which allows a product to be delivers at lower cost. The iteration may be stopped when a threshold is passed or if a convergence is experienced. This process implies that the conditions for the customer and for the supplier are optimised at the same time.

As it appears from the foregoing, the invention is an automated process where iterative procedures are used for complex products to achieve an optimised match between the requirements by the customer and the capabilities of the supplier.

## Claims

1. A computer system for automatically matching the requirements from a customer with the capabilities of a supplier of a complex product built up of modules, the system having a digital database comprising specifications for modules and comprising a classification scheme with a number of supply classes, each supply class being associated with a range of complexity factors and having a class capacity factor expressing the supply capacity of the specific classes relative to the total supply capacity of the supplier, the system comprising a computer that is configured to
- calculating a complexity factor dependent on the complexity of the product,
- determine the specific supply class associated with the complexity factor,
- calculate a needed supply capacity for supplying the product,
- compare whether the needed supply capacity is less than or equal to the capacity factor of the specific class and only to indicate accept of an order for supply of a product, if this is the case.

2. A system according to claim 1, wherein the class capacity factor is time dependent and variable in dependence of the requested delivery time.

3. A system according to claim 1 or 2, wherein the system is configured to update the class capacity factor dynamically in dependence of the actual supply capacity of the supplier in dependence of other products to be supplied by the supplier.

4. A system according to any preceding claim, wherein the complexity factor is a sum of weighted partial complexity factors.

5. A system according to claim 4, wherein a partial complexity factor is associated with production complexity or the production time or both.

6. A system according to claim 4 or 5, wherein a partial complexity factor is associated with complexity of the assembly of the product or the time for assembly of the product or both.

7. A system according to any one of the claims 4-6, wherein a partial complexity factor is associated with necessary approvals in connection with the supply of the product.

8. A system according to claim 4, 5, or 6, wherein the partial complexity factor is weighted with a weight factor, the weight factor being dependent on the acceptable delivery time or the acceptable costs or both.

9. A system according to any preceding claim, wherein the system is configured to fragmentise the product into a number of modules,
- to determine a module complexity factor to each of the modules,
- to determine the supply classes associated with the module complexity factors,
- to determine a needed module supply capacity for each module,
- to compare whether all of the needed module supply capacities are less than or equal to the class capacity factors, and only to accept the supply of a product, if this is the case.

10. A system according to claim 9, wherein the system is configured to
- determine a delivery time for each module in dependence of a time dependent supply capacity in the respective class associated for each module,
- calculate in dependence of the delivery time for each module a sequence of module assembly actions and check whether the complete sequence of actions fit into a final deadline for the entire assembly of the product.

11. A system according to claim 10, wherein the system is configured to
- calculate a sequence for production of the modules and in dependence thereof calculate an assembly sequence,
- check whether the assembly sequence matches a desired deadline for the entire assembly of the product, and if a match is not achieved,
- change the production and assembly sequence iteratively until a match is found or until the time for entire assembly is the earliest possible.

12. A system according to any preceding claim, wherein the system is configured to
- receive tolerance ranges for specifications of the product,
- determine a complex product having product specification within the tolerance ranges,
- determine the complexity factor of the product,
- provide or receive a threshold complexity factor,
- compare the complexity factor of the product with the threshold complexity factor, and in case that the complexity factor of the product is higher than the threshold complexity factor,
- fragmentise the product into a number of modules,
- determine a module complexity factor for each of the modules, and
- iteratively substitute at least one of the modules with a high complexity factor with modules having lower complexity factors until the complexity factor is reduced and the product specifications are still within the tolerance ranges.

13. A system according to claim 12, wherein the system is configured to continue the iterative substitution until the complexity factor is equal to or below the threshold complexity factor, or until the complexity factor is minimised.

14. A system according to any preceding claim, wherein the computer system is a portable computer.

15. A system according to claim 14, wherein the portable computer is configured to receive digital data from a central server, the digital data comprising actual class capacity factors reflecting the actual supply capacity of the supplier in the different classes.
